# EUROPÄISCHE PATENTSCHRIFT

(11) **EP 2 127 058 B1**
(45) Veröffentlichungstag und Bekanntmachung des Hinweises auf die Patenterteilung: **24.04.2019**
(21) Anmeldenummer: 07819413.1
(22) Anmeldetag: 29.10.2007
(51) Int. Cl.: H02K 33/02, H02K 33/16, H01F 38/14, H01F 7/06, H01F 7/16, H02J 50/10

(54) **AKTOR, INSBESONDERE LINEARANTRIEB, UND ANLAGE ODER MASCHINE**
ACTUATOR, IN PARTICULAR LINEAR DRIVE AND INSTALLATION OR MACHINE
ACTIONNEUR DESTINÉ NOTAMMENT À UN MÉCANISME D'ENTRAÎNEMENT LINÉAIRE ET INSTALLATION OU MACHINE

(30) Priorität: 27.11.2006 DE 102006056261
(43) Veröffentlichungstag der Anmeldung: 02.12.2009
(73) Patentinhaber: SEW-EURODRIVE GmbH & Co. KG, 76646 Bruchsal (DE)
(72) Erfinder: SIMON, Olaf, 76646 Bruchsal (DE); PODBIELSKI, Leobald, 76199 Karlsruhe (DE); SCHMIDT, Josef, D-76676 Graben-Neudorf (DE); UHL, Thomas, 76646 Bruchsal (DE)
(86) Internationale Anmeldenummer: PCT/EP2007/009372
(87) Internationale Veröffentlichungsnummer: WO 2008/064754

(56) Entgegenhaltungen:
- EP-A- 1 450 471
- WO-A-00/07285
- WO-A-02/062492
- US-A1- 2006 028 072

## Beschreibung

Die Erfindung betrifft einen Aktor, insbesondere Linearantrieb, und Anlage oder Maschine.

Aus der DE 44 46 779 ist ein System zur berührungslosen Energieübertragung bekannt.

**Aus der** EP 1 450 471 A **ist ein Motorantrieb für einen linearen Vibrationsmotor bekannt.**

**Aus der** WO 02/062492 A **ist ein Gleichstromlinearmotor bekannt.**

**Aus der** US 2006/028072 A1 **ist ein zylindrischer Linearmotor bekannt.**

**Aus der** WO 00/07285 A **ist ein Verfahren zum Steuern des Weges den Magnetflusses eines Permanentmagneten bekannt.**

Der Erfindung liegt daher die Aufgabe zugrunde, eine Anlage weiterzubilden, wobei viele Aktoren einsetzbar sein sollen und die Versorgung der Aktoren einfach herstellbar sein soll.

Erfindungsgemäß wird die Aufgabe bei dem Aktor nach den in Anspruch 1 und bei der Maschine oder Anlage nach den in Anspruch 13 angegebenen Merkmalen gelöst.

Wesentliche Merkmale der Erfindung bei dem Aktor sind, dass bei dem Aktor ein erster Teil des Aktors zumindest eine bestrombare Ringwicklung umfasst und ein zweiter Teil des Aktors zumindest einen Dauermagnet umfasst, wobei erster und zweiter Teil relativ zu einander bewegbar angeordnet sind.

Von Vorteil ist dabei, dass der Aktor sehr einfach auszuführen ist, einfach ansteuerbar ist und ein hoher Wirkungsgrad erreichbar ist. Außerdem ist der Aktor als kostengünstiger Linearantrieb ausführbar.

Erfindungsgemäß ist zwischen den Teilen ein Federelement angeordnet. Von Vorteil ist dabei, dass eine Kraft in Bewegungsrichtung erzeugbar ist und somit die von der Ringwicklung elektromagnetisch erzeugbare Kraft die Federkraft übersteigen oder unterschreiten kann, wodurch beide axialen Bewegungsrichtungen bewirkbar sind.

Bei einer vorteilhaften Ausgestaltung sind die Ringwicklung und der Magnet derart angeordnet, dass bei Bestromung der Ringwicklung eine entgegen der Federkraft wirksame Kraft erzeugbar ist. Von Vorteil ist dabei, dass bei Bestromung die elektromagnetisch erzeugte Kraft die bestimmende ist, also die Bewegung bestimmt. Somit ist bei Bestromung der zweite Teil entgegen der Federkraft bewegbar. Bei Nicht-Bestromung bestimmt die Federkraft die Bewegung.

Bei einer vorteilhaften Ausgestaltung ist abhängig von der Bestromung das bewegbar angeordnete Teil in mindestens zwei verschiedene Positionen bringbar, insbesondere die Position des Teils steuerbar ist. Von Vorteil ist dabei, dass je nach Bestromung oder Nicht-Bestromung die vordere oder hintere Position, insbesondere der Anschlag, erreichbar ist.

Bei einer vorteilhaften Ausgestaltung ist am bewegbaren Teil ein Sensor zur Erfassung der Position des Teils derart vorgesehen, dass die Position des Teils auf eine Sollposition hin regelbar ist. Von Vorteil ist dabei, dass die Position des zweiten Teils regelbar ist. Es sind also auch mehr als zwei Positionen erreichbar und einstellbar.

Bei einer vorteilhaften Ausgestaltung ist im Aktor eine elektronische Schaltung vorgesehen zur Erzeugung des Stromes für die Ringwicklung. Von Vorteil ist dabei, dass die Schaltung integriert ausgeführt ist und deren Entwärmung über das Gehäuse erfolgt. Ebenso erfolgt die Entwärmung der Ringspule über das Gehäuse. Vorteiligerweise ist dabei das Gehäuse mit Kühlrippen und/oder Kühlfingern ausgeführt.

Bei einer vorteilhaften Ausgestaltung umfasst die elektronische Schaltung eine Steuerung oder Regelung. Von Vorteil ist dabei, dass ohne Sensor Positionen des zweiten Teils ansteuerbar, mit Sensor das zweite Teil auf diese Position hin regelbar ist.

Bei einer vorteilhaften Ausgestaltung ist die elektronische Schaltung mit einer Sekundärspule verbunden, die mit einem Primärleiter induktiv koppelbar ist. Von Vorteil ist dabei, dass die Schaltung berührungslos versorgbar ist und ein mit der Sekundärspule verbundener Kondensator in der Schaltung integriert ausführbar ist. Außerdem ist die Entwärmung der Bauteile gemeinsam ausführbar.

Bei einer vorteilhaften Ausgestaltung ist der Primärwicklung von einer Mittelfrequenzstromquelle gespeist, insbesondere mit einer Frequenz von 10 bis 100 kHz. Von Vorteil ist dabei, dass hohe Wirkungsgrade erreichbar sind bei großem Luftabstand und großen zu übertragenden Leistungen, insbesondere im Bereich von mehreren Zehn Watt bis einigen Kilowatt. Weiterhin ist eine einfache Installationstechnik ausführbar, da die versorgende Primärleitung nur in induktiv, also kontaktlos, gekoppelt werden muss mit dem jeweiligen Aktor. Es genügt sogar ein bloßes Vorbeiführen des Primärleiters durch den Kopplungsbereich. Mittels der sekundärseitigen resonanten Anordnung, also Serienschaltung oder Reihenschaltung einer auf die Mittelfrequenz des in den Primärleiter eingespeisten Stromes abgestimmten Kapazität, ist sogar bei schwacher Kopplung ein hoher Wirkungsgrad erreichbar.

Bei einer vorteilhaften Ausgestaltung sind zusätzlich höher frequent aufmodulierte Stromanteile zur Datenübertragung zwischen Primärseite und Sekundärseite vorgesehen. Von Vorteil ist dabei, dass für die Übertragung von Steuerdaten keine weiteren Kabel oder dergleichen notwendig sind.

Bei einer vorteilhaften Ausgestaltung umfasst die elektronische Schaltung einen Gleichrichter und/oder eine Kapazität. Von Vorteil ist dabei, dass die Kapazität derart dimensioniert ist, dass die zugehörige Resonanzfrequenz im Wesentlichen der Mittelfrequenz entspricht.

Bei einer vorteilhaften Ausgestaltung ist ein Eisenjoch zur Rückleitung des Flusses außerhalb der Ringwicklung vorgesehen. Von Vorteil ist dabei, dass ein kostengünstiges Teil für die Rückleitung verwendet wird und der Wirkungsgrad verbessert ist.

Bei einer vorteilhaften Ausgestaltung ist der bewegbar angeordnete Teil ein Kolben, insbesondere aus Stahl, insbesondere der gleitgelagert ist im Gehäuse des Aktors. Von Vorteil ist dabei, dass ein einfach herstellbares Teil bewegbar ist, das in einfacher Weise mit dem anzutreibenden Objekt in Verbindung bringbar ist.

Erfindungsgemäß umfasst der Aktor mindestens zwei axial hintereinander angeordnete Ringwicklungen umfasst, deren Wicklungssinn gegenläufig ist, insbesondere entgegengerichtet. Von Vorteil ist dabei, dass nach außen eine verringerte Feldstärke feststellbar und wirksam ist. Außerdem ist die insgesamt wirksame Kraft doppelt so hoch wie bei einer einfachen Spule.

Wichtige Merkmale bei der Anlage oder Maschine sind, dass sie einen Aktor, insbesondere Linearantrieb, umfasst. Von Vorteil ist dabei, dass ein vorgenannter Aktor mit seinen Vorteilen einsetzbar ist. Insbesondere sind die Aktoren einfach und kostengünstig ansteuerbar.

Bei einer vorteilhaften Ausgestaltung sind mehr als ein oder zwei Aktoren von einem Primärleiter speisbar, wobei die Aktoren entlang dem Primärleiter angeordnet sind. Von Vorteil ist dabei, dass die Aktoren seriell versorgbar sind. Somit ist auch ein Kurzschluss bei einem Aktor unschädlich für die Funktion der anderen Aktoren.

Bei einer vorteilhaften Ausgestaltung ist der Primärleiter ein Linienleiter ist, wobei HF-Litze verwendet, insbesondere also Litze, deren Litzendrähte gegen einander isoliert vorgesehen sind. Von Vorteil ist dabei, dass ein kostengünstiges Kabel verwendbar ist und die durch Skineffekt bewirkten Verluste verminderbar sind.

Bei einer vorteilhaften Ausgestaltung sind die Aktoren entlang dem Primärleiter bewegbar angeordnet, insbesondere wobei der Primärleiter als geschlossene Schleife verlegt ist. Von Vorteil ist dabei, dass eine mittelfrequente Stromquelle als Versorgung an den Primärleiter anschließbar ist und die Aktoren galvanisch getrennt vom Primärleiter versorgbar sind.

Weitere Vorteile ergeben sich aus den Unteransprüchen.

### Bezugszeichenliste

1 Primärleiter
2 Sekundärwicklung
3 elektronische Schaltung, umfassend Gleichrichter
4 Aktorwicklung
20 Ferritkern
21 Primärleiter
22 Gehäuse
23 erste Ringwicklung
24 Eisenjoch
25 Kolben
26 Sekundärwicklung
27 Federelement
28 Dauermagnet
29 zweite Ringwicklung
30 ferromagnetischer Ring
31 Aktor

Die Erfindung wird nun anhand von Abbildungen näher erläutert:

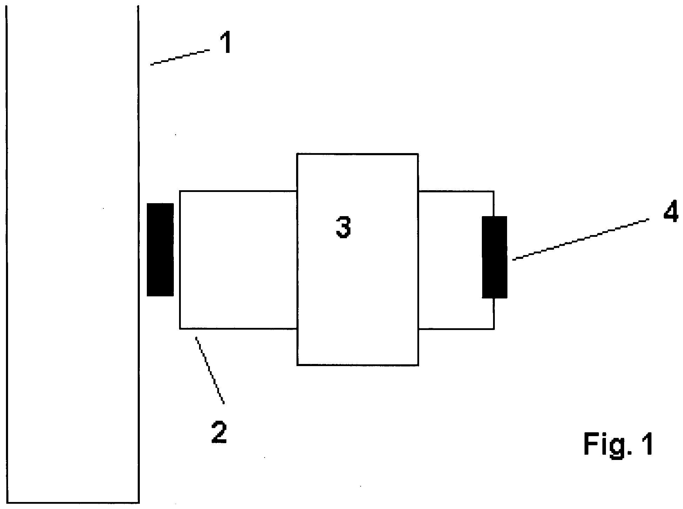

In der Figur 1 ist ein erfindungsgemäße Anlage oder Maschine skizziert. Dabei versorgt der Primärleiter 1 über eine induktive Kopplung einen Aktor, der eine Sekundärwicklung 2 umfasst, aus der eine elektronische Schaltung 3 des Aktors gespeist wird, die eine oder mehrere Aktorwicklungen 4 versorgt. Die elektronische Schaltung umfasst dabei zumindest einen Gleichrichter.

Bei weiteren erfindungsgemäßen Ausführungsbeispielen umfasst die elektronische Schaltung eine Kapazität, die derart mit der Sekundärwicklung parallel oder in Reihe geschaltet ist, dass die zugehörige Resonanzfrequenz der Mittelfrequenz des in den Primärleiter eingespeisten Stromes im Wesentlichen entspricht. Somit sind auch trotz Änderungen der Kopplungsstärke der induktiven Kopplung hohe Wirkungsgrade erreichbar und/oder große Leistungen berührungslos an den Aktor übertragbar.

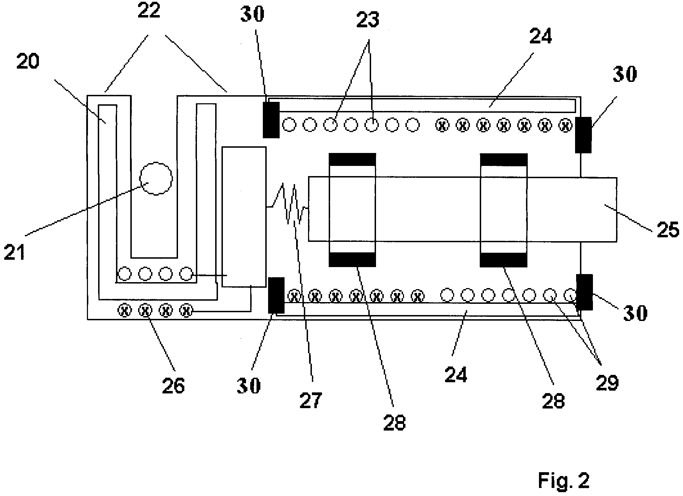

In Figur 2 ist ein Aktor mit seinem Gehäuse 22 näher dargestellt. Dabei umfasst das Gehäuse sowohl den Ferritkern 20, an dem die an den Primärleiter 21 induktiv gekoppelte Sekundärwicklung 26 vorgesehen ist, als auch die elektronische Schaltung, aus der die Aktorwicklung versorgt ist.

Dabei besteht die Aktorwicklung aus einer ersten Ringwicklung 23 und einer zweiten Ringwicklung 29. Dabei sind die Anordnungen der Ringwicklungen 23 und 29 axial gleichgerichtet orientiert, jedoch sind die Wicklungssinne gegenläufig orientiert.

Innerhalb der Ringwicklungen ist ein axial bewegbar angeordneter Kolben 25, der vorzugsweise aus einem magnetisierbaren Stoff besteht, vorgesehen. Vorzugsweise ist er im Gehäuse gelagert, insbesondere mit mindestens einem Gleitlager oder Linearlager.

Radial außerhalb der Ringwicklungen ist ein Eisenjoch 24 vorgesehen.

Am Kolben sind auch eine erste der ersten Ringwicklung zugeordnete, ringförmige Anordnung von Dauermagneten 28 und eine zweite der zweiten Ringwicklung zugeordnete, ringförmige Anordnung von Dauermagneten 28 verbunden. Dabei sind die Magnete auf einem den sonstigen Durchmesser des Kolbens überschreitendem Durchmesser vorgesehen.

Die erste ringförmige Anordnung ist vorzugsweise durch einen Ring aus magnetisierbarem Material vorgesehen, wobei ein Nordpol am radial äußeren Umfang und ein Südpol am inneren Umfang des Rings aufmagnetisiert ist. Statt eines Rings sind auch Einzelmagnete am Umfang des Kolbens vorsehbar, die in entsprechender Weise in radialer Richtung orientiert sind.

Die zweite ringförmige Anordnung ist vorzugsweise durch einen Ring aus magnetisierbarem Material vorgesehen, wobei ein Südpol am radial äußeren Umfang und ein Nordpol am inneren Umfang des Rings aufmagnetisiert ist. Statt eines Rings sind auch Einzelmagnete am Umfang des Kolbens vorsehbar, die in entsprechender Weise in radialer Richtung orientiert sind.

Die Verluste sind verringerbar, wenn der Abstand zwischen der ringförmigen Anordnung der Magnete und der ringförmigen Wicklung möglichst klein vorgesehen wird.

Der Kolben ist über das Federelement 27 am stationären Teil des Aktors vorgesehen.

In Figur 2 ist das eine Ende des Federelementes 27 am Kolben vorgesehen und das andere Ende des Federelementes 27 an der elektronischen Schaltung oder einer mit dieser fest verbundenen Komponente.

Der von der Ringwicklung erzeugte magnetische Fluss wird also im Inneren der Wicklungen wesentlich durch den Kolben geführt. Das außen liegende Eisenjoch dient zur Rückleitung dieses Flusses.

Bereiche des Eisenjochs und des Kolbens werden ebenfalls zur Führung des von der ringförmigen Anordnung der Magnete erzeugten Flusses verwendet, wobei allerdings zumindest in Teilbereiches eine gegenläufige Richtung ausgeprägt ist.

Bei Bestromung der Wicklungen wird eine Reaktionskraft erzeugt, die auf den Kolben in axialer Richtung wirkt und die Federkraft überwindet. Bei Umpolung der Bestromung und/oder alternativ wirksamer Bestromung der zweiten statt der ersten Wicklung wirkt die Kraft auf den Kolben in der anderen Richtung.

Somit ist der Kolben des Aktors in einfacher Weise je nach Bestromung in zwei verschiedene Stellungen bringbar, insbesondere Anschlagstellungen, wobei hierbei die axiale Bewegungsfreiheit an zwei verschiedenen axialen Positionen gehemmt ist.

Am vorderen und hinteren Endbereich des den Kolben umgebenden Gehäuseteils ist jeweils ein ferromagnetischer Ring 30 angebracht. Der Ring ist beispielsweise aus Stahl herstellbar oder auch aus einem Ferritmaterial. Im ersten Fall führt die magnetische Reluktanzkraft zu einer anziehenden Wirkkraft zwischen Kolben und Ring 30. Im zweiten Fall ist das Ferritmaterial vorzugsweise derart magnetisiert, dass eine anziehende Wirkkraft zwischen Kolben und Ring 30 erzeugt wird. Somit sind die Endlagen des Kolbens stabilisierbar. Der Aktor ist also in seinen Endlagen stabil gehalten, insbesondere auch bei Stromausfall.

Statt der Anschläge ist bei weiteren erfindungsgemäßen Ausführungsbeispielen es auch ermöglicht, beliebige Positionen des Kolbens zwischen seinen Endanschlägen anzufahren. Hierzu wird die Stärke des Stromes in den Wicklungen gesteuert.

Der Aktor ist insgesamt dicht und in hoher Schutzart ausgeführt. Hierzu sind auch Gleitlager für den Kolben aus Kunststoff verwendet.

Das Gehäuse des gesamten Aktors benötigt nach außen keine elektrischen Anschlusselemente sondern ist glatt und unterbrechungsfrei geschlossen gestaltet. Die Energie wird berührungslos übertragen . Ebenso wird Information, wie beispielsweise die Positionierung des Aktors in eine Position oder in eine Endlage berührungsfrei mittels hochfrequenter Aufmodulation auf den in die Primärleiter 1 eingespeisten Strom bewirkt.

Das Anschließen an die Energieversorgung erfolgt durch bloßes Einlegen des Primärleiters in die von dem Ferritkern der Sekundärwicklung teilweise umschlossene Vertiefung im Gehäuse.

Vorzugsweise ist das Gehäuse 22 einteilig ausgeführt.

Bei weiteren erfindungsgemäßen Ausführungsbeispielen wird am Aktor ein Sensor zur Erfassung der Position des Kolbens vorgesehen und die detektierte Information von der elektronischen Schaltung des Aktors zum Regeln des Kolbens auf eine Sollposition hin verwendet.

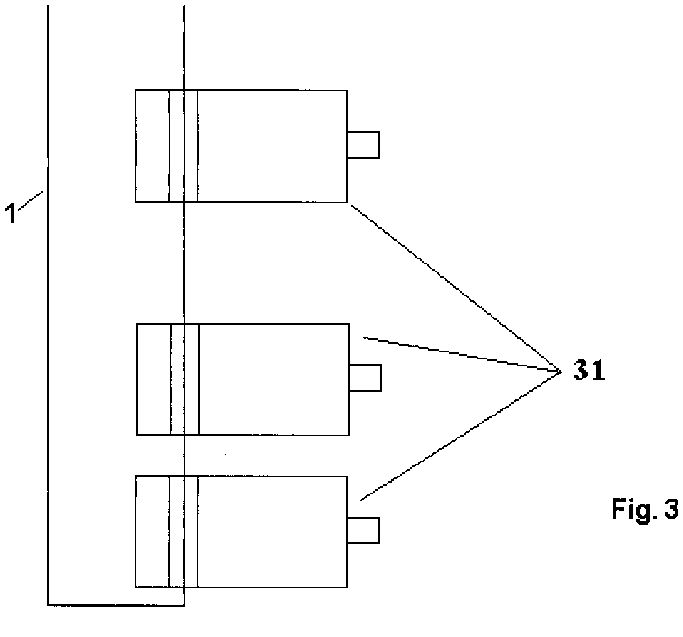

In Figur 3 ist eine Serienanordnung von Aktoren 31 entlang des Primärleiters 1 gezeigt. Dabei wird der Primärleiter durch die Ausnehmung jedes Aktors geführt. Vorzugsweise ist die Ausnehmung nach Figur 2 ausgeführt, also in Richtung der Normalenrichtung des U des U-förmigen Kerns, ausgeführt. Auf diese Weise ist ein guter Wirkungsgrad erreichbar.

Statt des U sind auch C- oder E-förmige Kerne vorteilhaft verwendbar.

Ein wichtiger Vorteil des Beispiels nach Figur 2 ist auch, dass nur ein einziges Gehäuse für den Aktor, also Antrieb, samt seiner elektronischen Schaltung notwendig ist. Sogar die Sekundärspule ist mit ihrem Kern im Gehäuse vorsehbar. Somit ist eine vollständig gekapselte Ausführung ermöglicht und dadurch auch ein Einsatz in Nassbereichen.

Darüber hinaus sind die Aktoren 31 entlang dem Primärleiter verschiebbar anordenbar, also auch entlang dem langgestreckten Primärleiter bewegbar anordenbar. Die Entwärmung aller inneren Komponenten des Aktors ist über das Gehäuse ausgeführt.

Bei weiteren erfindungsgemäßen Ausführungsbeispielen ist auch zur Verbesserung der Abdichtung ein Balg zwischen Gehäuse 22 und Kolben 25 vorgesehen. Dabei ist der Kolben 25 im Gehäuse nicht nur über ein Gleitlager sondern auch über ein Linearlager lagerbar.

## Patentansprüche

1. Aktor, insbesondere Linearantrieb,
**wobei** ein erster Teil des Aktors zumindest eine bestrombare Ringwicklung umfasst und
ein zweiter Teil des Aktors zumindest einen Dauermagnet umfasst und innerhalb der Ringwicklung angeordnet ist, wobei erster und zweiter Teil relativ zu einander bewegbar angeordnet sind,
**wobei zwischen den Teilen ein Federelement angeordnet ist zur Erzeugung einer Kraft in Bewegungsrichtung,**
**wobei der Aktor mindestens zwei axial hintereinander angeordnete Ringwicklungen umfasst, deren Wicklungssinn gegenläufig ist, insbesondere** entgegengerichtet,
wodurch sich die wirksame Kraft gegenüber einer einfachen Spule verdoppelt,
so ist eine Kraft in Bewegungsrichtung erzeugbar, wobei die von der Ringwicklung elektromagnetisch erzeugbare Kraft die Federkraft übersteigen oder unterschreiten kann, wodurch beide axialen Bewegungsrichtungen bewirkbar sind, **wobei** an dem vorderen und dem hinteren **axialen** Endbereich **des Aktors am ersten Teil des Aktors ein Mittel angeordnet ist, das mit den Dauermagneten des zweiten Teils eine anziehende Kraft** erzeugt, die den Aktor in seinen Endlagen auch bei Stromausfall stabil hält, **wobei das Mittel aus ferromagnetischem Material, insbesondere Stahl, gefertigt ist und/oder aus Ferritmaterial.**

2. Aktor nach mindestens einem der vorangegangenen Ansprüche, **dadurch gekennzeichnet, dass**
die Ringwicklung und der Magnet derart angeordnet sind, dass bei Bestromung der Ringwicklung eine entgegen der Federkraft wirksame Kraft erzeugbar ist.

3. Aktor nach mindestens einem der vorangegangenen Ansprüche, **dadurch gekennzeichnet, dass**
abhängig von der Bestromung der bewegbar angeordnete Teil in mindestens zwei verschiedene Positionen bringbar ist, insbesondere die Position des Teils steuerbar ist.

4. Aktor nach mindestens einem der vorangegangenen Ansprüche, **dadurch gekennzeichnet, dass**
am bewegbaren Teil ein Sensor zur Erfassung der Position des Teils derart vorgesehen ist, dass die Position des Teils auf eine Sollposition hin regelbar ist.

5. Aktor nach mindestens einem der vorangegangenen Ansprüche, **dadurch gekennzeichnet, dass**
im Aktor eine elektronische Schaltung vorgesehen ist zur Erzeugung des Stromes für die Ringwicklung
und/oder dass
die elektronische Schaltung eine Steuerung oder Regelung umfasst
und/oder dass
die elektronische Schaltung mit einer Sekundärspule verbunden ist, die mit einem Primärleiter induktiv koppelbar ist.

6. Aktor nach mindestens einem der vorangegangenen Ansprüche, **dadurch gekennzeichnet, dass**
der Primärwicklung von einer Mittelfrequenzstromquelle gespeist ist, insbesondere mit einer Frequenz von 10 bis 100 kHz.

7. Aktor nach mindestens einem der vorangegangenen Ansprüche, **dadurch gekennzeichnet, dass**
zusätzlich höher frequent aufmodulierte Stromanteile zur Datenübertragung zwischen Primärseite und Sekundärseite vorgesehen sind.

8. Aktor nach mindestens einem der vorangegangenen Ansprüche, **dadurch gekennzeichnet, dass**
die elektronische Schaltung einen Gleichrichter und/oder eine Kapazität umfasst.

9. Aktor nach mindestens einem der vorangegangenen Ansprüche, **dadurch gekennzeichnet, dass**
ein Eisenjoch zur Rückleitung des Flusses außerhalb der Ringwicklung vorgesehen ist.

10. Aktor nach mindestens einem der vorangegangenen Ansprüche, **dadurch gekennzeichnet, dass**
der bewegbar angeordnete Teil ein Kolben, insbesondere aus Stahl, ist, insbesondere der gleitgelagert ist im Gehäuse des Aktors.

11. Anlage oder Maschine, umfassend Aktor, insbesondere Linearantrieb, nach mindestens einem der vorangegangenen Ansprüche.

12. Anlage oder Maschine nach Anspruch 11 **dadurch gekennzeichnet, dass**
mehr als ein oder zwei Aktoren von einem Primärleiter speisbar sind, wobei die Aktoren entlang dem Primärleiter angeordnet sind.

13. Anlage oder Maschine nach Anspruch 11 oder 12 **dadurch gekennzeichnet, dass**
der Primärleiter ein Linienleiter ist, wobei HF-Litze verwendet ist, insbesondere also Litze, deren Litzendrähte gegen einander isoliert vorgesehen sind
und/oder dass
die Aktoren entlang dem Primärleiter bewegbar angeordnet sind, insbesondere wobei der Primärleiter als geschlossene Schleife verlegt ist
und/oder dass
das Mittel ein Dauermagnet ist, der derart magnetisiert ist, dass mit den Dauermagneten des zweiten Teils eine anziehende Kraft erzeugt wird.

## Claims

1. Actuator, in particular a linear drive,
wherein a first part of the actuator comprises at least one energisable ring winding and a second part of the actuator comprises at least one permanent magnet and is arranged within the ring winding,
wherein the first and second parts are arranged movably relative to one another,
wherein a spring element is arranged between the parts to generate a force in the movement direction,
wherein the actuator comprises at least two ring windings arranged axially one behind the other and the winding directions of which are opposite, in particular in the opposite direction, whereby the active force is doubled compared with a single coil, a force can thus be generated in the movement direction, wherein the force able to be electromagnetically generated by the ring winding can exceed or be less than the spring force, whereby the two axial movement directions can be implemented,
wherein a means is arranged at the front and rear axial end region of the actuator on the first part of the actuator, said means generating, together with the permanent magnets of the second part, an attraction force that holds the actuator stable in its end positions, even in the event of power failure,
wherein the means is made of ferromagnetic material, in particular steel, and/or of ferrite material.

2. Actuator according to at least one of the preceding claims,
**characterised in that**
the ring winding and the magnet are arranged such that a force acting counter to the spring force can be generated when the ring winding is energised.

3. Actuator according to at least one of the preceding claims,
**characterised in that**
depending on the current feed, the movably arranged part can be moved into at least two different positions, in particular the position of the part can be controlled.

4. Actuator according to at least one of the preceding claims,
**characterised in that**
on the movable part, a sensor for detecting the position of the part is provided such that the position of the part can be controlled in a closed-loop manner towards a target position.

5. Actuator according to at least one of the preceding claims,
**characterised in that**
an electronic circuit is provided in the actuator to generate the current for the ring winding and/or **in that**
the electronic circuit comprises an open-loop or closed-loop control
and/or **in that**
the electronic circuit is connected to a secondary coil, which can be inductively coupled to a primary conductor.

6. Actuator according to at least one of the preceding claims,
**characterised in that**
the primary winding is fed from a medium-frequency power source, in particular at a frequency of 10 to 100 kHz.

7. Actuator according to at least one of the preceding claims,
**characterised in that**
current portions modulated to higher frequencies are additionally provided for data transmission between the primary side and the secondary side.

8. Actuator according to at least one of the preceding claims,
**characterised in that**
the electronic circuit comprises a rectifier and/or a capacitor.

9. Actuator according to at least one of the preceding claims,
**characterised in that**
an iron yoke is provided outside the ring winding for returning the flux.

10. Actuator according to at least one of the preceding claims,
**characterised in that**
the movably arranged part is a piston, in particular made of steel, that in particular is slidably mounted in the housing of the actuator.

11. Installation or machine, comprising an actuator, in particular a linear drive, according to at least one of the preceding claims.

12. Installation or machine according to claim 11,
**characterised in that**
more than one or two actuators can be fed by a primary conductor, the actuators being arranged along the primary conductor.

13. Installation or machine according to either claim 11 or claim 12,
**characterised in that**
the primary conductor is a line conductor, a high-frequency litz wire being used, i.e. in particular a litz wire in which the stranded wires are provided in a manner insulated from one another
and/or **in that**
the actuators are arranged so as to be movable along the primary conductor, the primary conductor in particular being installed as a closed loop
and/or **in that**
the means is a permanent magnet that is magnetised such that an attraction force is generated together with the permanent magnets of the second part.

## Revendications

1. Actionneur, en particulier entraînement linéaire,
une première partie dudit actionneur incluant au moins un enroulement annulaire pouvant être sollicité par du courant, et
une seconde partie dudit actionneur incluant au moins un aimant permanent, et étant logée à l'intérieur dudit enroulement annulaire,
lesdites première et seconde parties étant agencées avec mobilité l'une par rapport à l'autre,
un élément élastique étant interposé entre lesdites parties, en vue d'engendrer une force dans la direction de mouvement,
ledit actionneur comptant au moins deux enroulements annulaires placés en succession axiale et dont les directions de bobinage sont inversées, notamment opposées l'une à l'autre,
doublant ainsi la force opérante, par rapport à une bobine simple,
ce qui permet d'engendrer une force dans la direction de mouvement, sachant que la force, pouvant être engendrée électromagnétiquement par l'enroulement annulaire, peut excéder positivement ou négativement la force élastique, les deux directions de mouvement axial pouvant alors être provoquées,
sachant qu'un moyen disposé dans les régions extrêmes axiales antérieure et postérieure de l'actionneur, sur la première partie dudit actionneur, engendre, avec les aimants permanents de la seconde partie, une force d'attraction qui retient ledit actionneur de manière stable dans ses positions extrêmes, également en cas de coupure de courant, lequel moyen est fabriqué en un matériau ferromagnétique, notamment en de l'acier, et/ou en un matériau à base de ferrite.

2. Actionneur selon la revendication 1,
**caractérisé par le fait que**
l'enroulement annulaire et l'aimant sont agencés de façon telle qu'une force, opérant en opposition à la force élastique, puisse être engendrée lors d'une sollicitation dudit enroulement annulaire par du courant.

3. Actionneur selon au moins l'une des revendications précédentes,
**caractérisé par le fait que**
la partie agencée avec mobilité peut être amenée à au moins deux emplacements différents, d'une manière tributaire de la sollicitation par du courant, l'emplacement de ladite partie pouvant notamment être commandé.

4. Actionneur selon au moins l'une des revendications précédentes,
**caractérisé par le fait**
**qu'**un capteur, conçu pour détecter l'emplacement de la partie mobile, est prévu sur ladite partie de façon telle que ledit emplacement de ladite partie puisse être régulé, pour atteindre un emplacement de consigne.

5. Actionneur selon au moins l'une des revendications précédentes,
**caractérisé par le fait**
**qu'**un circuit électronique est prévu, dans ledit actionneur, afin d'engendrer le courant affecté à l'enroulement annulaire ;
et/ou par le fait que
ledit circuit électronique est équipé d'une commande ou d'une régulation ;
et/ou par le fait que
ledit circuit électronique est raccordé à une bobine secondaire pouvant être couplée, par induction, à un conducteur primaire.

6. Actionneur selon au moins l'une des revendications précédentes,
**caractérisé par le fait que**
l'enroulement primaire est alimenté par une source de courant de fréquence moyenne, en particulier avec une fréquence de 10 à 100 kHz.

7. Actionneur selon au moins l'une des revendications précédentes,
**caractérisé par le fait que**
des composantes de courant, modulées sur des fréquences plus élevées, sont additionnellement prévues pour la transmission de données entre le côté primaire et le côté secondaire.

8. Actionneur selon au moins l'une des revendications précédentes,
**caractérisé par le fait que**
le circuit électronique renferme un redresseur et/ou un condensateur.

9. Actionneur selon au moins l'une des revendications précédentes,
**caractérisé par le fait**
**qu'**une culasse en fer est prévue pour renvoyer le flux à l'extérieur de l'enroulement annulaire.

10. Actionneur selon au moins l'une des revendications précédentes,
**caractérisé par le fait que**
la partie agencée avec mobilité est un piston, notamment en acier, monté en particulier de manière glissante dans le carter dudit actionneur.

11. Installation ou machine
incluant un actionneur, en particulier un entraînement linéaire conforme à au moins l'une des revendications précédentes.

12. Installation ou machine selon la revendication 11,
**caractérisée par le fait que**
des actionneurs, en nombre supérieur à un ou deux, peuvent être alimentés par un conducteur primaire, lesdits actionneurs étant disposés le long dudit conducteur primaire.

13. Installation ou machine selon la revendication 11 ou 12,
**caractérisée par le fait que**
le conducteur primaire est un conducteur de ligne faisant usage d'un toron HF, c'est-à-dire, en particulier, d'un toron dont les brins torsadés sont prévus avec isolation mutuelle ; et/ou **par le fait que**
les actionneurs sont agencés avec mobilité le long dudit conducteur primaire, lequel conducteur primaire est notamment installé en tant que boucle fermée ;
et/ou **par le fait que**
le moyen est un aimant permanent, magnétisé de façon telle qu'une force d'attraction soit engendrée avec les aimants permanents de la seconde partie.
